# EUROPÄISCHE PATENTSCHRIFT

(11) **EP 3 767 305 B1**
(45) Veröffentlichungstag und Bekanntmachung des Hinweises auf die Patenterteilung: **22.01.2025**
(21) Anmeldenummer: 20185191.2
(22) Anmeldetag: 10.07.2020
(51) Int. Cl.: G01P 1/12, G01P 3/48, G01D 18/00, H04L 67/12

(54) **VERFAHREN ZUM BETREIBEN EINER KRAFTFAHRZEUGGESCHWINDIGKEITSSENSORVORRICHTUNG, KRAFTFAHRZEUGGESCHWINDIGKEITSSENSORVORRICHTUNG UND KRAFTFAHRZEUG MIT EINER KRAFTFAHRZEUGGESCHWINDIGKEITSSENSORVORRICHTUNG**
MOTOR VEHICLE SPEED SENSOR DEVICE; METHOD FOR OPERATING A MOTOR VEHICLE SPEED SENSOR DEVICE AND MOTOR VEHICLE WITH MOTOR VEHICLE SPEED SENSOR DEVICE
PROCÉDÉ DE FONCTIONNEMENT D'UN DISPOSITIF CAPTEUR DE VITESSE DE VÉHICULE AUTOMOBILE, DISPOSITIF CAPTEUR DE VITESSE DE VÉHICULE AUTOMOBILE ET VÉHICULE AUTOMOBILE DOTÉ D'UN DISPOSITIF CAPTEUR DE VITESSE DE VÉHICULE AUTOMOBILE

(30) Priorität: 15.07.2019 DE 102019210440
(43) Veröffentlichungstag der Anmeldung: 20.01.2021
(73) Patentinhaber: Continental Automotive Technologies GmbH, 30175 Hannover (DE)
(72) Erfinder: Lindinger, Andreas, 65824 Schwalbach a. Ts. (DE); Lange, Roland, 65824 Schwalbach a. Ts. (DE)
(74) Vertreter: Continental Corporation

(56) Entgegenhaltungen:
- EP-B1- 0 829 069
- DE-A1- 102018 132 506
- US-B1- 10 245 904

## Beschreibung

Die Erfindung betrifft ein Verfahren zum Betreiben einer Kraftfahrzeuggeschwindigkeitssensorvorrichtung, eine Kraftfahrzeuggeschwindigkeitssensorvorrichtung und ein Kraftfahrzeug mit einer Kraftfahrzeuggeschwindigkeitssensorvorrichtung.

Zur Überwachung der Einhaltung gesetzlicher Vorschriften in Bezug auf zulässige Geschwindigkeiten und Ruhezeiten bei Kraftfahrzeugen ist es verbreitet, digitale Tachographen in Kraftfahrzeugen zu installieren. Diese digitalen Tachographen sind mit Kraftfahrzeuggeschwindigkeitssensorvorrichtungen zur Erfassung einer Geschwindigkeit des Kraftfahrzeugs verbunden. Die Geschwindigkeitswerte werden von den digitalen Tachographen empfangen und durch diese protokolliert. Bei den genannten Kraftfahrzeuggeschwindigkeitssensorvorrichtungen handelt es sich gewöhnlicherweise um Hallsensoren oder optische Sensoren, die in einem Getriebe des Kraftfahrzeugs angeordnet sind, um eine Rotation eines Inkrementrades zu erfassen. An dem Inkrementrad sind üblicherweise Magneten oder optische Markierungen angebracht, welche durch die Kraftfahrzeuggeschwindigkeitssensorvorrichtung an einer vorbestimmten Position erfasst werden können. Im Fahrbetrieb des Kraftfahrzeugs dreht sich des Inkrementrad in Abhängigkeit von der aktuellen Geschwindigkeit des Kraftfahrzeugs. Somit erfasst die Kraftfahrzeuggeschwindigkeitssensorvorrichtung periodisch eine physikalische Größe. Durch die Erfassung des periodischen Signals ist es möglich, über die Drehung des Inkrementrades eine Geschwindigkeit des Kraftfahrzeugs zu bestimmen und diese an den digitalen Tachographen zu übermitteln.

Digitale Tachographen und Kraftfahrzeuggeschwindigkeitssensorvorrichtungen sind das Ziel von unzulässigen Manipulationen, die durchgeführt werden, um Verstöße gegen gesetzliche Vorschriften in Bezug auf die Ruhezeiten zu umgehen. Solche Manipulationen erfolgen beispielsweise mittels einer Änderung einer von einer Sensoreinheit an eine Auswerteeinheit der Kraftfahrzeuggeschwindigkeitssensorvorrichtung übersandten Botschaft oder einem Austausch der Sensoreinheit der Kraftfahrzeuggeschwindigkeitssensorvorrichtung durch eine unzulässige Sensoreinheit. Dies hat zur Folge, dass abweichende Geschwindigkeitsdaten an die digitale Tachographenvorrichtung übertragen werden, wodurch Gesetzesverstöße verschleiert werden.

Um eine Manipulation zu verhindern, sind Vorrichtungen und Verfahren üblich, die eine Manipulation eines Signals während einer Übertragung von einer Kraftfahrzeuggeschwindigkeitssensorvorrichtung an einen digitalen Tachographen erkennen oder verhindern sollen.

In der EP 0 829 069 B1 ist eine Datenübertragungsvorrichtung in einem Fahrzeug offenbart, die aus einem Impulsgeber und einem Kontrollgerät besteht. Der Impulsgeber ist mit dem Kontrollgerät über eine Signalleitung und eine Datenleitung verbunden. Die Signalleitung ist für eine unverschlüsselte Übertragung eines Signals vorgesehen, während die Datenleitung für eine verschlüsselte Übertragung des Signals vorgesehen ist. Das Kontrollgerät ist dazu eingerichtet, das verschlüsselt übertragene Signal mit dem unverschlüsselt übertragenen Signal zu vergleichen, um die Unverfälschtheit des Signals zu überprüfen.

Eine Manipulation der Kraftfahrzeuggeschwindigkeitssensorvorrichtung lässt sich hierbei jedoch nicht erkennen.

DE 10 2018 132 506 A1 betrifft allgemein Reifendruckkontrollsysteme und insbesondere ein Verfahren und eine Vorrichtung zum Erleichtern einer Reifendruckkontrollsystem-Sendemodus-Auswahl. Es wird ein Verfahren offenbart, das die Schritte Empfangen eines unverschlüsselten Signals, das einen abnormalen Reifendruck angibt, mithilfe eines Prozessors, Wechseln in einen verschlüsselten Modus mit Sensoren mithilfe des Prozessors, Empfangen eines verschlüsselten Folgestatus des Reifendrucks von den Sensoren mithilfe des Prozessors sowie Bestimmen, ob das unverschlüsselte Signal authentisch ist, auf Grundlage des verschlüsselten Folgestatus des Reifendrucks mithilfe des Prozessors, umfasst.

Es ist eine Aufgabe der Erfindung, eine Manipulation einer Kraftfahrzeuggeschwindigkeitssensorvorrichtung zu verhindern. Die Erfindung umfasst ein Verfahren nach Anspruch 1 zum Betreiben einer Kraftfahrzeuggeschwindigkeitssensorvorrichtung, die eine Sensoreinheit und eine Auswerteeinheit aufweist. In der Sensoreinheit und der Auswerteeinheit ist jeweils ein Identifikationsmerkmal der Sensoreinheit gespeichert. Das Identifikationsmerkmal ermöglicht es, die Sensoreinheit eindeutig zu identifizieren. Dabei kann es sich beispielsweise um eine Seriennummer der Sensoreinheit handeln. Das Identifikationsmerkmal zur Identifikation der Sensoreinheit ist sowohl in der Sensoreinheit als auch in der Auswerteeinheit gespeichert. Die Speicherung kann beispielsweise während der Fertigung der Sensoreinheit und/oder der Auswerteeinheit erfolgt sein.

Bei der Sensoreinheit kann es sich um einen Sensor mit einem Schaltkreis handeln, welcher dazu eingerichtet ist, eine physikalische Größe zu erfassen, welche mit einer Kraftfahrzeuggeschwindigkeit eines Kraftfahrzeugs in Verbindung steht. In dem Verfahren ist es vorgesehen, dass durch die Sensoreinheit diese physikalische Größe erfasst und in Abhängigkeit von der physikalischen Größe ein Messsignal generiert wird. Mit anderen Worten wird die physikalische Größe durch die Sensoreinheit gemessen und das Messsignal durch die Sensoreinheit erstellt. Durch die Sensoreinheit wird zumindest in Abhängigkeit von dem Messsignal und dem Identifikationsmerkmal der Sensoreinheit in einem vorbestimmten Sicherungsverfahren ein Prüfwert generiert. Der Prüfwert wird außerdem in Abhängigkeit von einem Zählerwert der Botschaft generiert.

Mit anderen Worten wird durch die Sensoreinheit das vorbestimmte Sicherungsverfahren durchgeführt, um den, dem Identifikationsmerkmal und dem Messsignal zugeordneten Prüfwert zu erstellen. Der Prüfwert kann dem individuellen Messsignal und dem Identifikationsmerkmal der Sensoreinheit zugeordnet sein. Es kann sich beispielsweise um eine auch als Checksum bezeichnete Prüfsumme handeln. Dies bedeutet, dass der Prüfwert nur für das jeweilige Identifikationsmerkmal in Kombination mit dem jeweiligen Messsignal gültig ist. Dadurch ist es möglich, eine Manipulation oder Veränderung des Messsignals und/oder des Identifikationsmerkmals anhand eines ungültigen Prüfwerts zu erkennen.

Durch die Sensoreinheit wird eine Botschaft generiert, welche das Messsignal und den Prüfwert aufweist. Die Botschaft wird von der Sensoreinheit an die Auswerteeinheit übertragen. Mit anderen Worten wird die Botschaft, welche das Messsignal und den zugeordneten Prüfwert umfasst, durch die Sensoreinheit versandt und durch die Auswerteeinheit empfangen. Durch die Auswerteeinheit wird in einem vorbestimmten Prüfverfahren der Prüfwert zumindest in Abhängigkeit von dem Messsignal, dem Identifikationsmerkmal der Sensoreinheit und dem Zählerwert der Botschaft überprüft. Mit anderen Worten wird das vorbestimmte Prüfverfahren von der Auswerteeinheit durchgeführt, um das empfangene Messsignal und die Urheberschaft der Sensoreinheit zu verifizieren. Dadurch ist es möglich zu überprüfen, ob das Messsignal während der Übertragung verändert wurde und/oder ob das Messsignal von einer anderen Sensoreinheit versandt wurde. Ist das Prüfverfahren des Prüfwerts erfolgreich, so wird das Messsignal durch die Auswerteeinheit freigegeben. Mit anderen Worten wird das Messsignal als gültig und von einer zulässigen Stelle erkannt und für eine weitere Verarbeitung oder Weiterleitung freigegeben.

Durch die Erfindung ergibt sich der Vorteil, dass eine Manipulation einer Kraftfahrzeuggeschwindigkeitssensorvorrichtung durch einen Austausch einer Sensoreinheit erkannt werden kann.

Die Erfindung umfasst auch optionale Weiterbildungen, durch die sich weitere Vorteile ergeben.

Eine Weiterbildung der Erfindung sieht vor, dass die Sensoreinheit ein digitaler Hallsensor ist. Mit anderen Worten handelt es sich bei der Sensoreinheit um eine Hallsonde, welche dazu eingerichtet ist, ein Magnetfeld mittels des Hall-Effekts zu erfassen und das erfasste Magnetfeld als digitales Messsignal auszugeben. Der digitale Hallsensor kann einen integrierten Schaltkreis umfassen, der dazu eingerichtet ist, das Messsignal und die Botschaft zu generieren. Dadurch ergibt sich der Vorteil, dass eine Bestimmung der Fahrzeuggeschwindigkeit über eine Erfassung eines durch einen Magneten eines rotierenden Inkrementrades generierten periodischen Magnetfelds ermöglicht ist.

Eine Weiterbildung der Erfindung sieht vor, dass die Sensoreinheit ein digitaler optischer Sensor ist. Mit anderen Worten ist die Sensoreinheit dazu eingerichtet, ein optisches Signal zu erfassen. Es kann beispielsweise vorgesehen sein, dass eine optische Markierung an einem Inkrementrad angeordnet ist, um durch eine Erfassungsfrequenz der Markierung die Kraftfahrzeuggeschwindigkeit bestimmen zu können.

Eine Weiterbildung der Erfindung sieht vor, dass das Messsignal bei einem bestandenen Prüfverfahren von der Auswerteeinheit an einen digitalen Tachographen übertragen wird. Mit anderen Worten ist es vorgesehen, dass das Messsignal im Fall einer Gültigkeit des Prüfwertes durch die Auswerteeinheit an den digitalen Tachographen versandt wird. Dadurch ergibt sich der Vorteil, dass der digitale Tachograph nur Messsignale empfängt, bei denen sichergestellt ist, dass sie von der zulässigen Sensoreinheit stammen. Es kann beispielsweise vorgesehen sein, dass das in der Botschaft enthaltene Messsignal während des Prüfverfahrens überprüft wird und das Messsignal nur an den digitalen Tachographen übertragen wird, wenn der Prüfwert gültig ist.

Die Erfindung sieht vor, dass der Prüfwert in dem vorbestimmten Sicherungsverfahren in Abhängigkeit von einem Zählerwert der Botschaft generiert wird, und der Prüfwert in dem vorbestimmten Sicherungsverfahren in Abhängigkeit von dem Zählerwert der Botschaft überprüft wird. Mit anderen Worten ist es vorgesehen, dass der Prüfwert in Abhängigkeit von einem Wert generiert wird, der individuell für die jeweilige Botschaft erstellt wird. Der Zählerwert kann beispielsweise einen Wert eines Zählers sein, der sich mit jeder versandten Botschaft in der Sensoreinheit und mit jeder durch die Auswerteeinheit empfangenen Botschaft erhöhen kann. Dadurch ergibt sich der Vorteil, dass eine duplizierte Botschaft über den Prüfwert durch die Auswerteeinheit identifiziert werden kann. Es kann somit sichergestellt sein, dass es nicht möglich ist, eine Manipulation durchzuführen, indem eine Botschaft auf dem Weg von der Sensoreinheit zu der Auswerteeinheit abgefangen und mehrmals an die Auswerteeinheit versandt wird. Somit ist es möglich, sogenannte Replay-Angriffe, welche eine erneute Übertragung einer abgefangenen Botschaft beschreiben, zu erkennen. Es kann beispielsweise vorgesehen sein, dass eine Weiterleitung des Messsignals unterbunden wird, wenn der Prüfwert mit einem bereits empfangenen Prüfwert übereinstimmt.

Eine Weiterbildung der Erfindung sieht vor, dass der Zählerwert der Botschaft einen Zeitstempel umfasst. Mit anderen Worten wird der Prüfwert in Abhängigkeit von einem Zeitstempel, wobei es sich beispielsweise um eine Uhrzeit und/oder ein Datum handeln kann, generiert. Dadurch ergibt sich der Vorteil, dass eine Aktualität der Botschaft sichergestellt werden kann.

Eine Weiterbildung der Erfindung sieht vor, dass das Identifikationsmerkmal der Sensoreinheit in einem jeweiligen nicht wiederbeschreibbaren Speichern der Sensoreinheit und der Auswerteeinheit gespeichert ist. Mit anderen Worten ist das Identifikationsmerkmal derart in der Sensoreinheit und der Auswerteeinheit gespeichert, dass es sich nachträglich, d. h. nach einem einmaligen Schreiben nicht verändern lässt. Dadurch ergibt sich der Vorteil, dass eine Manipulation über ein Überschreiten des Identifikationsmerkmals unterbunden ist.

Eine Weiterbildung der Erfindung sieht vor, dass die Botschaft von der Sensoreinheit an die Auswerteeinheit verschlüsselt übertragen wird. Mit anderen Worten wird die Botschaft durch die Sensoreinheit vor dem Versand an die Auswerteeinheit verschlüsselt und durch die Auswerteeinheit bei einem Empfang wieder entschlüsselt. Dadurch ergibt sich der Vorteil, dass eine Analyse einer abgefangenen Botschaft erschwert wird. Die Verschlüsselung kann beispielsweise nach einem symmetrischen Verfahren mit einem in der Sensoreinheit und der Auswerteeinheit gespeicherten Schlüssel oder nach einem asymmetrischen Verfahren mit einem Schlüsselpaar erfolgen, wobei ein Schlüssel des Schlüsselpaares in der Sensoreinheit und ein korrespondierender Schlüssel in der Auswerteeinheit gespeichert sind.

Die Erfindung umfasst auch eine Kraftfahrzeuggeschwindigkeitssensorvorrichtung nach Anspruch 8. Die Kraftfahrzeuggeschwindigkeitssensorvorrichtung weist eine Sensoreinheit und eine Auswerteeinheit auf, in denen jeweils ein Identifikationsmerkmal der Sensoreinheit gespeichert ist. Die Sensoreinheit ist dazu eingerichtet, eine physikalische Größe zu erfassen und in Abhängigkeit von der physikalischen Größe ein Messsignal zu generieren. Die Sensoreinheit ist dazu eingerichtet, zumindest in Abhängigkeit von dem Messsignal und dem Identifikationsmerkmal der Sensoreinheit in einem vorbestimmten Sicherungsverfahren einen Prüfwert zu generieren. Die Sensoreinheit ist dazu eingerichtet, eine Botschaft, umfassend das Messsignal und den Prüfwert, an die Auswerteeinheit zu senden. Die Auswerteeinheit ist dazu eingerichtet, die Botschaft zu empfangen und in einem vorbestimmten Prüfverfahren den Prüfwert zumindest in Abhängigkeit von dem Messsignal und dem Identifikationsmerkmal der Sensoreinheit zu überprüfen. Die Auswerteeinheit ist dazu eingerichtet, bei einem bestandenen Prüfverfahren das Messsignal freizugeben.

Zu der Erfindung gehört auch ein Kraftfahrzeug nach Anspruch 9 mit einer Kraftfahrzeuggeschwindigkeitssensorvorrichtung. Das Kraftfahrzeug kann insbesondere ein Lastkraftwagen oder ein Personenkraftwagen sein. Die Kraftfahrzeuggeschwindigkeitssensorvorrichtung kann beispielsweise in einem Getriebe des Kraftfahrzeugs angeordnet sein und eine Drehung eines Elements des Getriebes erfassen. Das Kraftfahrzeug kann einen digitalen Tachographen aufweisen.

Zu der Erfindung gehören auch Weiterbildungen der erfindungsgemäßen Kraftfahrzeuggeschwindigkeitssensorvorrichtung und des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Kraftfahrzeuggeschwindigkeitssensorvorrichtung und des erfindungsgemäßen Kraftfahrzeugs hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt in skizzenhafter Darstellung:
Fig. 1 ein Kraftfahrzeug mit einer Kraftfahrzeuggeschwindigkeitssensorvorrichtung;
Fig. 2 einen Ablauf eines Verfahrens zum Betreiben einer Kraftfahrzeuggeschwindigkeitssensorvorrichtung; und
Fig. 3 einen weiteren Ablauf eines Verfahrens zum Betreiben einer Kraftfahrzeuggeschwindigkeitssensorvorrichtung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden .

Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

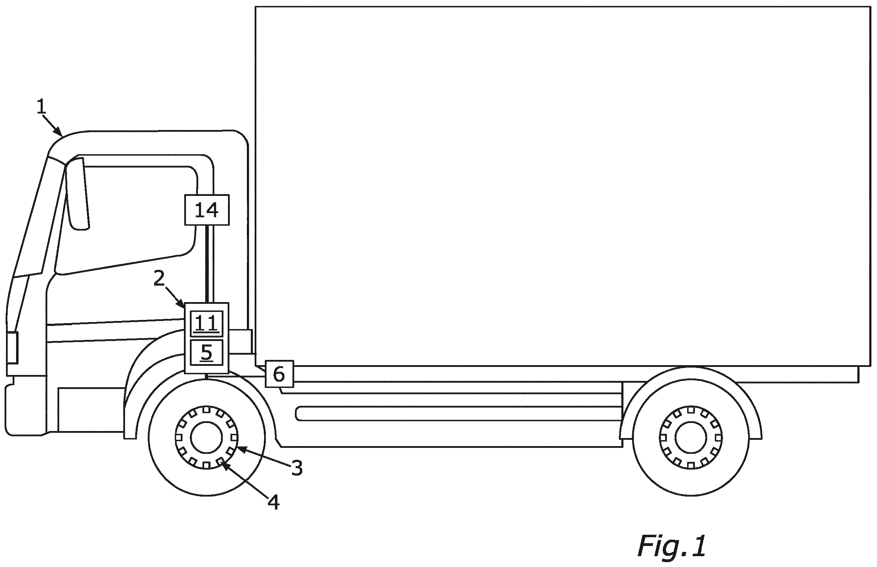

Fig. 1 zeigt ein Kraftfahrzeug mit einer Kraftfahrzeuggeschwindigkeitssensorvorrichtung. Das Kraftfahrzeug 1 kann beispielsweise ein Lastkraftwagen oder ein Personenkraftwagen sein und eine Kraftfahrzeuggeschwindigkeitssensorvorrichtung 2 zum Erfassen einer Fahrgeschwindigkeit aufweisen. Die Kraftfahrzeuggeschwindigkeitssensorvorrichtung 2 kann beispielsweise an einem Getriebe des Kraftfahrzeugs 1 angeordnet sein und dazu eingerichtet sein, physikalische Größen, welche mit einer Kraftfahrzeuggeschwindigkeit in Verbindung stehen, zu erfassen. Die Kraftfahrzeuggeschwindigkeitssensorvorrichtung 2 kann beispielsweise gegenüber einem Inkrementrad 3 angeordnet sein, wobei das Inkrementrad 3 in Abhängigkeit von einer Fahrzeuggeschwindigkeit eine jeweilige Drehgeschwindigkeit aufweisen kann. Die Erfassung der Geschwindigkeit des Inkrementrades 3 kann beispielsweise über eine Erfassung von Inkrementen 4 des Inkrementrades 3 durch eine Sensoreinheit 5 der Kraftfahrzeuggeschwindigkeitssensorvorrichtung 2 erfolgen. Die Sensoreinheit 5 kann beispielsweise ein optischer Sensor oder ein Hallsensor sein, welche die Inkremente 4 erfassen kann. Die Inkremente 4 können beispielsweise ein magnetisches Element oder eine optische Markierung aufweisen.

Die Sensoreinheit 5 kann dazu eingerichtet sein, in Abhängigkeit von der physikalischen Größe 6, beispielsweise einem erfassten Magnetfeld, ein Messsignal 7 zu generieren. Das Messsignal 7 kann beispielsweise digital sein. Zur Identifikation der Sensoreinheit 5 wird in der Sensoreinheit 5 ein Identifikationsmerkmal 8 der jeweiligen Sensoreinheit 5 gespeichert, wobei das Identifikationsmerkmal 8 ein nichtwiederbeschreibbarer Wert sein kann. In der Sensoreinheit 5 kann ein Schaltkreis vorhanden sein, welcher dazu eingerichtet ist, aus dem Messsignal 7 nach einem vorbestimmten Sicherungsverfahren einen Prüfwert 9 zu generieren, welcher es ermöglicht, eine Integrität des Messsignals 7 und des Identifikationsmerkmals 8 in einem vorbestimmten Prüfverfahren zu überprüfen. Der Prüfwert 9 wird zumindest in Abhängigkeit von dem Messsignal 7 und dem Identifikationsmerkmal 8 der Sensoreinheit 5, beispielsweise nach einer zyklische Redundanzprüfung (cyclic redundancy check), generiert .

Dadurch ist es einem Empfänger möglich, über den Prüfwert 9 die Integrität des Identifikationsmerkmals 8 und des Messsignals 7 zu überprüfen.

Die Sensoreinheit 5 versendet das Messsignal 7 zusammen mit dem Prüfwert 9 in einer Botschaft 10 an eine Auswerteeinheit 11. Die Auswerteeinheit 11 empfängt die Botschaft 10 und überprüft den Prüfwert 9 nach einem vorbestimmten Prüfverfahren zumindest in Abhängigkeit von dem Messsignal 7 und dem Identifikationsmerkmal 8.

Durch das Prüfverfahren ist es möglich, zu überprüfen, ob das durch die Auswerteeinheit 11 empfangene Messsignal 7 mit dem von der Sensoreinheit 5 versandten Messsignal 7 übereinstimmt. Über den Prüfwert 9 und das Identifikationsmerkmal 8 ist es auch möglich zu überprüfen, ob die Botschaft 10 von der Sensoreinheit 5 der Kraftfahrzeuggeschwindigkeitssensorvorrichtung 2 kommt.

Es ist vorgesehen, dass sowohl in der Sensoreinheit 5 als auch in der Auswerteeinheit 11 ein Zählwert 12 gespeichert ist. Der Zählwert 12 kann eine Sequenznummer der Botschaft 10 sein. Der Zählerwert 12 kann in der Sensoreinheit 5 die Zahl der versandten Botschaften 10 aufweisen und in der Auswerteeinheit 11 die Anzahl der empfangenen Botschaften 10. Es ist vorgesehen, dass in der Sensoreinheit 5 eine Generierung des Prüfwerts 9 in Abhängigkeit von dem Zählwert 12 erfolgt. Somit hängt der Prüfwert 9 von dem Zählerwert in der Sensoreinheit 5 ab. Es ist vorgesehen, dass bei dem Prüfverfahren der Prüfwert 9 in Abhängigkeit von dem in der Auswerteeinheit 11 gespeicherten Zählerwert 12 erfolgt. Somit kann durch die Auswerteeinheit 11 überprüft werden, ob eine abgefangene und duplizierte Botschaft 10 durch einen unberechtigten Nutzer an die Auswerteeinheit 11 versandt wurde, um die Protokollierung zu manipulieren.

Es kann vorgesehen sein, dass der Zählerwert 12 beispielsweise einen Zeitstempel 13 umfasst, der ein aktuelles Datum oder eine aktuelle Uhrzeit aufweist. Es kann vorgesehen sein, dass die Übertragung der Botschaft 10 von der Sensoreinheit 5 an die Auswerteeinheit 11 verschlüsselt erfolgt. Es kann vorgesehen sein, dass bei einer erfolgreichen Durchführung des Prüfverfahrens das empfangene Messsignal 7 durch die Auswerteeinheit 11 freigegeben wird. Dies kann bedeuten, dass das Messsignal 7 weiter durch die Auswerteeinheit 11 verarbeitet wird und/oder an eine Tachographenvorrichtung 14 des Kraftfahrzeugs 1 versandt wird.

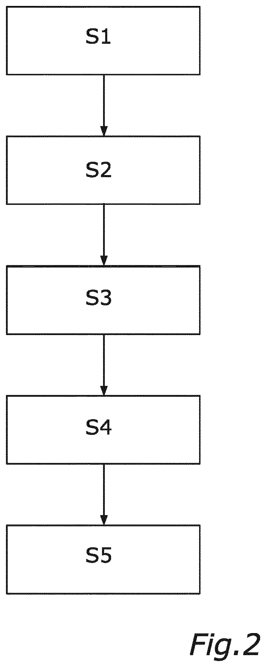

Fig. 2 zeigt den Ablauf eines Verfahrens zum Betreiben einer Kraftfahrzeuggeschwindigkeitssensorvorrichtung. Es ist vorgesehen, dass in einem ersten Schritt S1 durch die Sensoreinheit 5 die physikalische Größe 6 erfasst wird. In Abhängigkeit von der erfassten physikalischen Größe 6 wird durch die Sensoreinheit 5 das Messsignal 7 generiert.

In einem Schritt S2 wird durch die Sensoreinheit 5 zumindest in Abhängigkeit von dem Messsignal 7 und dem in der Sensoreinheit 5 gespeicherten Identifikationsmerkmal 8, welches eine eindeutige Identifikation der Sensoreinheit 5 ermöglicht, nach einem vorbestimmten Sicherungsverfahren ein Prüfwert 9 generiert.

In einem Schritt S3 wird durch die Sensoreinheit 5 die Botschaft 10 generiert , welche sowohl das Messsignal 7 als auch den Prüfwert 9 umfasst.

Diese Botschaft 10 wird von der Sensoreinheit 5 an die Auswerteeinheit 11 übertragen.

In einem Schritt S4 verifiziert die Auswerteeinheit 11 die empfangene Botschaft 10 , wobei in dem vorbestimmten Prüfverfahren der Prüfwert 9 in Abhängigkeit von dem Messsignal 7 der Botschaft 10 als auch mit dem in der Auswerteeinheit 11 gespeicherten Identifikationsmerkmal 8 überprüft wird.

In einem Schritt S5 erfolgt, falls die Überprüfung des Prüfwerts 9 nach dem vorbestimmten Prüfverfahren erfolgreich ist, eine Freigabe oder Weiterverarbeitung des Messsignals 7 durch die Auswerteeinheit 11 . Falls der Prüfwert 9 in dem vorbestimmten Prüfverfahren als ungültig bewertet wird, kann es vorgesehen sein, dass das empfangene Messsignal 7 verworfen wird.

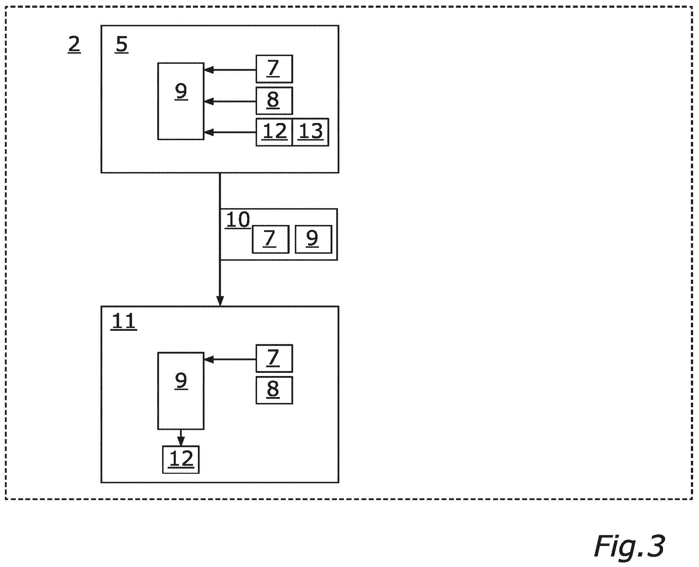

Fig. 3 zeigt einen Ablauf eines Verfahrens. Es ist vorgesehen , dass der Prüfwert 9 in der Sensoreinheit 5 aus dem Identifikationsmerkmal 8, dem Zählerwert 12 und dem Messsignal 7 generiert wird. Die Botschaft 10, welche den Prüfwert 9 und das Messsignal 7 aufweist, wird durch die Sensoreinheit 5 verschlüsselt und an die Auswerteeinheit 11 versandt. Bei dem Empfang der Botschaft 10 durch die Auswerteeinheit 11 entschlüsselt die Auswerteeinheit 11 die Botschaft 10 und führt das vorbestimmte Prüfverfahren durch. Die Überprüfung erfolgt durch eine Überprüfung des Prüfwerts 9 mit dem Messsignal 7, dem Identifikationsmerkmal 8 und dem Zählerwert 12 . Wurde einer der Werte manipuliert, wird der Prüfwert 9 in dem Prüfverfahren als ungültig bewertet.

Ein Hall-IC wird als Sensoreinheit 5 verwendet, um in einer Kraftfahrzeuggeschwindigkeitssensorvorrichtung 2 die Bewegung eines Kraftfahrzeugs 1 zu erkennen. Dieses Hall-IC ist über eine analoge Signalleitung mit der Auswerteeinheit 11 (Applikationskontroller) verbunden. In der Sicherheitsarchitektur kann diese Verbindung eine Schwachstelle mit Möglichkeiten einer Manipulation darstellen.

Eine Auswerteeinheit 11 kann nach derzeitigem Stand der Technik nicht verifizieren, ob ein Messsignal 7 in einer empfangenen Botschaft 10 tatsächlich von der in der Kraftfahrzeuggeschwindigkeitssensorvorrichtung 2 eingebauten Sensoreinheit 5 Hall-IC stammt. Es lässt sich somit nicht authentifizieren.

Die Sensoreinheit 5 kann eine digitale Schnittstelle für das Übertragen des Messsignals 7 in einer Botschaft 10 aufweisen. Das Protokoll kann für die Botschaft 10 einen Prüfwert 9 in Form einer Checksumme für eine Erkennung zufälliger Fehler in dem Messsignal 7 vorsehen. Zur Authentisierung der installierten Sensoreinheit 5 kann in diese Checksumme ein Geheimnis mit eingerechnet werden. Das Geheimnis kann ein geräteindividuelles Identifikationsmerkmal 8 sein, das der Sensoreinheit 5 eindeutig zugeordnet sein kann. Das Identifikationsmerkmal 8 kann in der Produktion in die Sensoreinheit 5 und die Auswerteeinheit 11 mit einer Funktion eingebracht werden, die ausschließlich eine Schreibfunktion und keine Lesefunktion bietet. Das Identifikationsmerkmal 8 kann auch durch einen kryptographischen Algorithmus implementiert werden (kryptographische Checksumme oder Verschlüsselung der Botschaft).

Zusätzlich wird durch einen Zählerwert 12 eine sogenannte Freshness-Information bei der Generierung des Prüfwerts 9 berücksichtigt , um das Wiedereinspielen alter Botschaften 10 zu erkennen. Das kann zum Beispiel ein Zähler sein, der mit jeder neuen Botschaft 10 erhöht wird. Alternativ zu der Möglichkeit, die Checksumme mit dem Identifikationsmerkmal zu verknüpfen und einen zusätzlichen, auch zufällig erzeugten Schlüssel zum Schutz vor Manipulationen zu verwenden, kann es vorgesehen sein, den Schlüssel selbst als das Identifikationsmerkmal zu verwenden oder aus dem Identifikationsmerkmal nach einem vorbestimmten Verfahren abzuleiten. Die Checksumme in der Botschaft kann dann wie üblich mittels einer zyklischen Redundanzprüfung CRC zur Erkennung von Übertragungsfehlern erzeugt werden. Die gesamte Botschaft kann mit diesem gemeinsamen Geheimnis ("Identifikationsschlüssel") verschlüsselt werden, um Angriffe zu erkennen.

Durch die geräteindividuelle Checksumme kann ein manipuliertes Messsignal erkannt werden. Die Lösung erschwert einen im Rahmen einer Manipulation durchgeführten Angriff.

Insgesamt zeigt das Beispiel, wie durch die Erfindung eine individualisierte Kommunikation mit einer Sensoreinheit bereitgestellt werden kann.

## Patentansprüche

1. Verfahren zum Betreiben einer
Kraftfahrzeuggeschwindigkeitssensorvorrichtung (2), aufweisend eine Sensoreinheit (5) und eine Auswerteeinheit (11), in denen jeweils ein Identifikationsmerkmal (8) der Sensoreinheit (5) gespeichert ist,
wobei
- durch die Sensoreinheit (5) eine physikalische Größe (6) erfasst und in Abhängigkeit von der physikalischen Größe (6) ein Messsignal (7) generiert wird,
- durch die Sensoreinheit (5) zumindest in Abhängigkeit von dem Messsignal (7) und dem Identifikationsmerkmal (8) der Sensoreinheit (5) in einem vorbestimmten Sicherungsverfahren ein Prüfwert (9) generiert wird,
- eine Botschaft (10), umfassend das Messsignal (7) und den Prüfwert (9), von der Sensoreinheit (5) an die Auswerteeinheit (11) übertragen wird,
- durch die Auswerteeinheit (11) in einem vorbestimmten Prüfverfahren der Prüfwert (9) zumindest in Abhängigkeit von dem Messsignal (7) und dem Identifikationsmerkmal (8) der Sensoreinheit (5) überprüft wird, und
- durch die Auswerteeinheit (11) bei einem bestandenen Prüfverfahren das Messsignal (7) freigegeben wird, wobei
- der Prüfwert (9) in dem vorbestimmten Sicherungsverfahren in Abhängigkeit von einem Zählerwert (12) der Botschaft (10) generiert wird, und
- der Prüfwert (9) in dem vorbestimmten Sicherungsverfahren in Abhängigkeit von dem Zählerwert (12) der Botschaft (10) überprüft wird.

2. Verfahren nach Anspruch 1, **dadurch gekennzeichnet, dass** die Sensoreinheit (2) ein digitaler Hall-Sensor ist.

3. Verfahren nach Anspruch 1, **dadurch gekennzeichnet, dass** die Sensoreinheit (2) ein digitaler optischer Sensor ist.

4. Verfahren nach einem der vorhergehenden Ansprüche, **dadurch gekennzeichnet, dass** das Messsignal (7) bei einem bestandenen Prüfverfahren von der Auswerteeinheit (11) an einen digitalen Tachographen (14) übertragen wird.

5. Verfahren nach einem der vorhergehenden Ansprüche, **dadurch gekennzeichnet, dass** der Zählerwert (12) der Botschaft (10) einen Zeitstempel (13) umfasst.

6. Verfahren nach einem der vorhergehenden Ansprüche, **dadurch gekennzeichnet, dass** das Identifikationsmerkmal (8) der Sensoreinheit (5) in einem jeweiligen nicht wiederbeschreibbaren Speicher der Sensoreinheit (5) und der Auswerteeinheit (11) gespeichert ist.

7. Verfahren nach einem der vorhergehenden Ansprüche, **dadurch gekennzeichnet, dass** die Botschaft (10) von der Sensoreinheit (5) an die Auswerteeinheit (11) verschlüsselt übertragen wird.

8. Kraftfahrzeuggeschwindigkeitssensorvorrichtung (2), eingerichtet zur Durchführung eines Verfahrens nach einem der Ansprüche 1 bis 7, wobei die Kraftfahrzeuggeschwindigkeitssensorvorrichtung (2) eine Sensoreinheit (5) und eine Auswerteeinheit (11) aufweist, in denen jeweils ein Identifikationsmerkmal (8) der Sensoreinheit (5) gespeichert ist, wobei
- die Sensoreinheit (5) dazu eingerichtet ist, eine physikalische Größe (6) zu erfassen und in Abhängigkeit von der physikalischen Größe (6) ein Messsignal (7) zu generieren,
- die Sensoreinheit (5) dazu eingerichtet ist, zumindest in Abhängigkeit von dem Messsignal (7) und dem Identifikationsmerkmal (8) der Sensoreinheit (5) in einem vorbestimmten Sicherungsverfahren einen Prüfwert (9) zu generieren,
- die Sensoreinheit (5) dazu eingerichtet ist, eine Botschaft (10), umfassend das Messsignal (7) und den Prüfwert (9), an die Auswerteeinheit (11) zu senden,
- die Auswerteeinheit (11) dazu eingerichtet ist, die Botschaft (10) zu empfangen, in einem vorbestimmten Prüfverfahren den Prüfwert (9) zumindest in Abhängigkeit von dem Messsignal (7) und dem Identifikationsmerkmal (8) der Sensoreinheit (5) zu überprüfen, und bei einem bestandenen Prüfverfahren das Messsignal (7) freizugeben, wobei
- der Prüfwert (9) in dem vorbestimmten Sicherungsverfahren in Abhängigkeit von einem Zählerwert (12) der Botschaft (10) generiert wird, und
- der Prüfwert (9) in dem vorbestimmten Sicherungsverfahren in Abhängigkeit von dem Zählerwert (12) der Botschaft (10) überprüft wird.

9. Kraftfahrzeug (1), aufweisend eine Kraftfahrzeuggeschwindigkeitssensorvorrichtung (2) nach Anspruch 8.

## Claims

1. Method for operating a
motor vehicle speed sensor device (2) having a sensor unit (5) and an evaluation unit (11), in each of which an identification feature (8) of the sensor unit (5) is stored, wherein
- a physical variable (6) is recorded by the sensor unit (5) and a measurement signal (7) is generated as a function of the physical variable (6),
- a test value (9) is generated by the sensor unit (5) at least as a function of the measurement signal (7) and the identification feature (8) of the sensor unit (5) in a predetermined security method,
- a message (10) comprising the measurement signal (7) and the test value (9) is transmitted from the sensor unit (5) to the evaluation unit (11),
- the test value (9) is checked by the evaluation unit (11) in a predetermined test method at least as a function of the measurement signal (7) and the identification feature (8) of the sensor unit (5), and
- the measurement signal (7) is released by the evaluation unit (11) when a test method is successfully completed, wherein
- the test value (9) is generated in the predetermined security method as a function of a counter value (12) of the message (10), and
- the test value (9) is checked in the predetermined security method as a function of the counter value (12) of the message (10).

2. Method according to Claim 1, **characterized in that** the sensor unit (2) is a digital Hall sensor.

3. Method according to Claim 1, **characterized in that** the sensor unit (2) is a digital optical sensor.

4. Method according to one of the preceding claims, **characterized in that** the measurement signal (7) is transmitted from the evaluation unit (11) to a digital tachograph (14) when a test method is successfully completed.

5. Method according to one of the preceding claims, **characterized in that** the counter value (12) of the message (10) comprises a timestamp (13).

6. Method according to one of the preceding claims, **characterized in that** the identification feature (8) of the sensor unit (5) is stored in a respective non-rewritable memory of the sensor unit (5) and of the evaluation unit (11).

7. Method according to one of the preceding claims, **characterized in that** the message (10) is transmitted in encrypted form from the sensor unit (5) to the evaluation unit (11).

8. Motor vehicle speed sensor device (2), configured to carry out a method according to one of Claims 1 to 7, wherein the motor vehicle speed sensor device (2) has a sensor unit (5) and an evaluation unit (11), in each of which an identification feature (8) of the sensor unit (5) is stored, wherein
- the sensor unit (5) is configured to record a physical variable (6) and to generate a measurement signal (7) as a function of the physical variable (6),
- the sensor unit (5) is configured to generate a test value (9) at least as a function of the measurement signal (7) and the identification feature (8) of the sensor unit (5) in a predetermined security method,
- the sensor unit (5) is configured to send a message (10) comprising the measurement signal (7) and the test value (9) to the evaluation unit (11),
- the evaluation unit (11) is configured to receive the message (10), to check the test value (9) in a predetermined test method at least as a function of the measurement signal (7) and the identification feature (8) of the sensor unit (5), and to release the measurement signal (7) when a test method is successfully completed, wherein
- the test value (9) is generated in the predetermined security method as a function of a counter value (12) of the message (10), and
- the test value (9) is checked in the predetermined security method as a function of the counter value (12) of the message (10).

9. Motor vehicle (1) having a motor vehicle speed sensor device (2) according to Claim 8.

## Revendications

1. Procédé permettant de faire fonctionner un
dispositif (2) de capteur de vitesse de véhicule automobile, présentant une unité de capteur (5) et une unité d'évaluation (11) dans lesquelles une particularité d'identification (8) de l'unité de capteur (5) est stockée respectivement, dans lequel
- l'unité de capteur (5) détecte une grandeur physique (6) et génère un signal de mesure (7) en fonction de la grandeur physique (6),
- l'unité de capteur (5) génère une valeur de contrôle (9) dans un procédé de sauvegarde prédéterminé, au moins en fonction du signal de mesure (7) et de la particularité d'identification (8) de l'unité de capteur (5),
- un message (10) comprenant le signal de mesure (7) et la valeur de contrôle (9) est transmis par l'unité de capteur (5) à l'unité d'évaluation (11),
- l'unité d'évaluation (11) contrôle dans un procédé de contrôle prédéterminé la valeur de contrôle (9) au moins en fonction du signal de mesure (7) et de la particularité d'identification (8) de l'unité de capteur (5), et
- le signal de mesure (7) est validé par l'unité d'évaluation (11) en cas de procédé de contrôle réussi, dans lequel
- la valeur de contrôle (9) est générée dans un procédé de sauvegarde prédéterminé en fonction d'une valeur de compteur (12) du message (10), et
- la valeur de contrôle (9) est contrôlée dans le procédé de sauvegarde prédéterminé en fonction de la valeur de compteur (12) du message (10).

2. Procédé selon la revendication 1, **caractérisé en ce que** l'unité de capteur (2) est un capteur à effet Hall numérique.

3. Procédé selon la revendication 1, **caractérisé en ce que** l'unité de capteur (2) est un capteur optique numérique.

4. Procédé selon l'une quelconque des revendications précédentes, **caractérisé en ce que** le signal de mesure (7) est transmis par l'unité d'évaluation (11) à un tachygraphe numérique (14) en cas de procédé de contrôle réussi.

5. Procédé selon l'une quelconque des revendications précédentes, **caractérisé en ce que** la valeur de compteur (12) du message (10) comprend un horodatage (13).

6. Procédé selon l'une quelconque des revendications précédentes, **caractérisé en ce que** la particularité d'identification (8) de l'unité de capteur (5) est stockée dans une mémoire non réinscriptible respective de l'unité de capteur (5) et de l'unité d'évaluation (11).

7. Procédé selon l'une quelconque des revendications précédentes, **caractérisé en ce que** le message (10) est transmis de manière chiffrée de l'unité de capteur (5) à l'unité d'évaluation (11).

8. Dispositif (2) de capteur de vitesse de véhicule automobile permettant d'exécuter un procédé selon l'une quelconque des revendications 1 à 7, le dispositif (2) de capteur de vitesse de véhicule automobile présentant une unité de capteur (5) et une unité d'évaluation (11) dans lesquelles respectivement une particularité d'identification (8) de l'unité de capteur (5) est stockée, dans lequel
- l'unité de capteur (5) est conçue pour détecter une grandeur physique (6) et pour générer un signal de mesure (7) en fonction de la grandeur physique (6),
- l'unité de capteur (5) est conçue pour générer une valeur de contrôle (9) dans un procédé de sauvegarde prédéterminé, au moins en fonction du signal de mesure (7) et de la particularité d'identification (8) de l'unité de capteur (5),
- l'unité de capteur (5) est conçue pour envoyer à l'unité d'évaluation (11) un message (10) comprenant le signal de mesure (7) et la valeur de contrôle (9),
- l'unité d'évaluation (11) est conçue pour recevoir le message (10), pour contrôler dans un procédé de contrôle prédéterminé la valeur de contrôle (9) au moins en fonction du signal de mesure (7) et de la particularité d'identification (8) de l'unité de capteur (5), et pour valider le signal de mesure (7) en cas de procédé de contrôle réussi, dans lequel
- la valeur de contrôle (9) est générée dans un procédé de sauvegarde prédéterminé en fonction d'une valeur de compteur (12) du message (10), et
- la valeur de contrôle (9) est contrôlée dans le procédé de sauvegarde prédéterminé en fonction de la valeur de compteur (12) du message (10).

9. Véhicule automobile (1) présentant un dispositif (2) de capteur de vitesse de véhicule automobile selon la revendication 8.
